# FASCICULE DE BREVET EUROPEEN

(11) **EP 4 139 191 B1**
(45) Date de publication et mention de la délivrance du brevet: **10.09.2025**
(21) Numéro de dépôt: 21715596.9
(22) Date de dépôt: 29.03.2021
(51) Int. Cl.: B62D 21/15, B62D 25/20, B60K 1/04

(54) **VÉHICULE DOTÉ D'UNE PARECLOSE RENFORCÉE**
FAHRZEUG MIT VERSTÄRKTEM GLASHALTEANSCHLAG
VEHICLE PROVIDED WITH A REINFORCED GLAZING STOP

(30) Priorité: 22.04.2020 FR 2004010
(43) Date de publication de la demande: 01.03.2023
(73) Titulaire: RENAULT s.a.s., 92100 Boulogne-Billancourt (FR); NISSAN MOTOR CO., LTD., Kanagawa 221-0023 (JP)
(72) Inventeur: FARGEAS, Nicolas, 28410 SERVILLE (FR)
(74) Mandataire: Renault Group
(86) Numéro de dépôt international: PCT/EP2021/058141
(87) Numéro de publication internationale: WO 2021/213782

(56) Documents cités:
- DE-T5- 112011 104 518
- FR-A1- 2 895 356
- FR-B1- 2 895 356
- US-A1- 2002 180 244
- US-A1- 2019 275 874

## Description

La présente invention concerne un véhicule doté d'une pareclose renforcée Pour les besoins de la description, on se référera à un repère orthonormé direct XYZ classiquement utilisé en conception automobile, dans lequel l'axe X désigne la direction longitudinale avant-arrière du véhicule, orienté vers l'arrière, l'axe Y désigne la direction transversale et est orienté vers la droite du véhicule, l'axe Z désigne la direction verticale, et est orienté vers le haut.

Les véhicules automobiles comprennent généralement un châssis configuré pour supporter l'ensemble des composants mécaniques et la carrosserie du véhicule. Le châssis comprend classiquement deux longerons longitudinaux et une pluralité de traverses transversales disposées entre lesdits longerons. Un plancher de véhicule automobile est supporté par le châssis et délimite l'intérieur de l'habitacle du véhicule. Généralement, le plancher d'un véhicule automobile comprend une partie arrière appelée « plancher arrière », reliée à une partie avant appelée « plancher avant ».

Le plancher arrière délimite la cabine des passagers arrière et comprend une partie avant délimitant une zone de plancher destinée à recevoir les pieds des passagers, aussi appelée « cave à pied » et une partie arrière surélevée par rapport à la partie avant et délimitant une zone de plancher destinée à recevoir les sièges de la deuxième rangée de sièges. Les parties avant et arrière du plancher arrière sont reliée par un épaulement ou portion de jonction appelée « pareclose ». Ainsi, la pareclose constitue une paroi pleine s'étendant suivant un plan sensiblement transversal et vertical YZ du véhicule.

Pour certains véhicules électriques, notamment pour les véhicules hybrides, il s'avère nécessaire de renforcer la structure de la caisse pour pouvoir protéger efficacement la batterie électrique de traction, lors d'un choc accidentel du véhicule contre un obstacle extérieur. Dans le cas d'un tel choc, qui peut par exemple être causé par un poteau extérieur en position latérale par rapport au véhicule, la batterie ne doit ni s'enflammer, ni tomber par terre, et les modules internes qui composent ladite batterie ne doivent pas être endommagés. Seule une dégradation du carter de la batterie peut être tolérée.

Un véhicule électrique selon l'invention présente une structure de caisse renforcée permettant d'assurer, avec sûreté et fiabilité, la sauvegarde de la batterie électrique lors d'un choc accidentel du véhicule contre un obstacle extérieur, et en particulier lors d'un choc latéral accidentel lié à la présence d'un poteau extérieur. Un exemple peut être vu dans US 2019/275874 A1.

La présente invention a pour objet un véhicule électrique comprenant un plancher arrière comportant une partie avant et une partie arrière, séparées par une pareclose, ladite partie arrière comportant une portion avant dotée d'un compartiment et d'une batterie électrique, la batterie électrique étant logée dans le compartiment, ledit compartiment étant délimité par ladite pareclose.

Selon l'invention, la pareclose comprend un tube de renforcement s'étendant le long de celle-ci sur une longueur qui est supérieure ou égale à la dimension de la batterie considérée le long de ladite pareclose, la pareclose comprenant deux zones d'extrémité déformables s'étendant de chaque côté du tube de renforcement. Pour rappel, la pareclose est une paroi s'étendant dans un plan vertical et transversal YZ du véhicule et séparant la partie avant et la partie arrière du plancher arrière, ladite partie arrière étant destinée à recevoir des sièges arrière et la partie avant étant prévus pour les pieds de passagers qui seraient assis sur les sièges arrière. La pareclose constitue une paroi délimitant le compartiment destiné à loger la batterie, et selon l'invention, elle est renforcée par un tube de renforcement indéformable destiné à préserver la batterie dans le cas d'un choc du véhicule contre un obstacle extérieur pouvant par exemple être un poteau dans une position latérale par rapport au véhicule. Les zones d'extrémité déformables de la pareclose permettent d'absorber au moins partiellement l'énergie produite lors d'un tel choc en se déformant. Il n'est en effet pas souhaitable que la pareclose constitue dans son intégralité une barre indéformable, car elle pourrait alors transmettre une grande partie de cette énergie à d'autres élément du véhicule et provoquer leur endommagement. Le tube peut par exemple, être rectiligne ou incurvé, ou peut être cintré en présentant deux segments inclinés. Le tube peut posséder une section transversale ayant par exemple une forme carrée, circulaire, rectangulaire ou de toute autre forme. Préférentiellement, le tube de renforcement est une pièce rapportée pouvant se fixer à la pareclose par tout moyen, comme par exemple, par soudage ou avec des vis et des écrous. Le tube de renforcement s'étend sur la pareclose selon une direction préférentiellement horizontale et transversale Y du véhicule. Avantageusement, le tube de renforcement est métallique et est par exemple réalisé en acier. Le tube couvre la totalité de la longueur du côté de la batterie s'étendant le long de la pareclose, afin de préserver l'intégralité de ladite batterie dans le cas d'un choc du véhicule contre un obstacle extérieur. En effet, un poteau extérieur en position latérale par rapport au véhicule, ne pourra pas venir impacter directement la batterie en raison de la présence du tube de renforcement.

Selon une caractéristique possible de l'invention, le tube de renforcement est rectiligne et est fixé à la pareclose de manière à s'étendre parallèlement à ladite pareclose. Par rapport à un choc accidentel contre un obstacle extérieur pouvant par exemple être un poteau latéral, un tube de renforcement de forme rectiligne est plus efficace qu'un tube ayant n'importe quelle autre forme avec le même poids. La direction suivant laquelle s'étend le tube de renforcement est préférentiellement horizontale et transversale Y.

Selon une caractéristique possible de l'invention, le tube est fixé dans une zone supérieure de la pareclose de sorte qu'un bord longitudinal supérieur du tube de renforcement tangente un bord longitudinal supérieur de la pareclose. C'est dans cette position particulière que le tube de renforcement a été jugé le plus efficace vis-à-vis d'un choc accidentel du véhicule contre un obstacle extérieur.

Selon une caractéristique possible de l'invention, le tube est creux. De cette manière, le tube peut parfaitement jouer son rôle de protection de la batterie électrique, sans alourdir exagérément le poids du véhicule.

Selon une caractéristique possible de l'invention, le tube est délimité par une paroi fermée, un côté de la paroi ayant été déformé pour venir au contact d'un autre côté de ladite paroi en définissant deux tubes secondaires parallèles. De cette manière, la section transversale du tube de renforcement à un profil en forme de B. C'est avec une telle forme de section, que le tube de renforcement a été jugé le plus efficace, car il montre une raideur accrue par rapport à un tube ayant un autre profil de section transversale. La section transversale de chaque tube secondaire est inférieure à la section transversale du tube de renforcement. Avantageusement, les deux tubes secondaires ont des dimensions identiques.

Selon une caractéristique possible de l'invention, les deux tubes secondaires sont fermés et sont séparés par une zone de contact entre les deux côtés de ladite paroi. Pour cette configuration, le tube de renforcement possède une raideur accrue, tout en ne surchargeant pas trop le véhicule.

Selon une caractéristique possible de l'invention, la pareclose comprend une première paroi arrimée au plancher arrière, le tube de renforcement étant solidarisé à une deuxième paroi de ladite pareclose qui est fixée à ladite première paroi, de sorte que le tube de renforcement soit situé entre ladite première paroi et ladite deuxième paroi. Avantageusement, la deuxième paroi présente une certaine raideur et peut également jouer le rôle d'un deuxième élément de protection vis-à-vis de la batterie en complétant le tube de renforcement.

Selon une caractéristique possible de l'invention, le tube de renforcement est solidarisé à la deuxième paroi par soudure. Ce moyen de liaison est particulièrement efficace, surtout s'il est réalisé par l'intermédiaire de plusieurs points de soudure répartis sur toute la longueur du tube de renforcement.

Selon une caractéristique possible de l'invention, la deuxième paroi présente deux faces perpendiculaires, le tube de renforcement étant soudé auxdites deux faces. De cette manière la liaison du tube de renforcement à la pareclose est robuste et stable, puisqu'elle est effectuée dans deux directions perpendiculaires de l'espace.

Selon une caractéristique possible de l'invention, le tube et la deuxième paroi sont réalisés en acier profilé. Il s'agit d'un matériau présentant une bonne rigidité tout en étant facile à usiner.

Un véhicule selon l'invention présente l'avantage de posséder une batterie électrique qui est bien protégée par rapport à un choc accidentel dudit véhicule contre un obstacle extérieur, grâce à l'insertion judicieuse d'un tube de renforcement qui est de géométrie simple et qui est peu encombrant, dans une pareclose de plancher. De plus, cette insertion ne nécessite ni un outillage spécifiquement conçu pour cette opération, ni des manipulations compliquées requérant un grand soin et une grande précision.

On donne ci-après une description détaillée d'un mode de réalisation préféré d'un véhicule selon l'invention en se référant aux figures suivantes :
[Fig. 1] représente une vue en perspective d'un véhicule selon l'invention montrant le positionnement de la batterie électrique par rapport à la pareclose,
[Fig. 2] représente une vue en perspective d'une partie arrière de plancher arrière d'un véhicule selon l'invention,
[Fig. 3] représente une vue du dessus d'une partie arrière de plancher arrière d'un véhicule selon l'invention, montrant l'emplacement de la batterie électrique par rapport à la pareclose,
[Fig. 4] représente une vue en coupe axiale longitudinale selon un plan XZ d'une pareclose et d'une batterie électrique d'un véhicule selon l'invention,
[Fig. 5] représente une vue en perspective éclatée d'une pareclose d'un véhicule selon l'invention,
[Fig. 6] représente une vue en perspective de la pareclose montée de la figure 4,
[Fig. 7] représente une vue en perspective d'une deuxième face de la pareclose d'un véhicule selon l'invention et sur laquelle est fixé le tube de renforcement,
[Fig. 8] représente une vue en perspective de la partie arrière d'un plancher arrière d'un véhicule selon l'invention, montrant le tube de renforcement placé dans la pareclose.

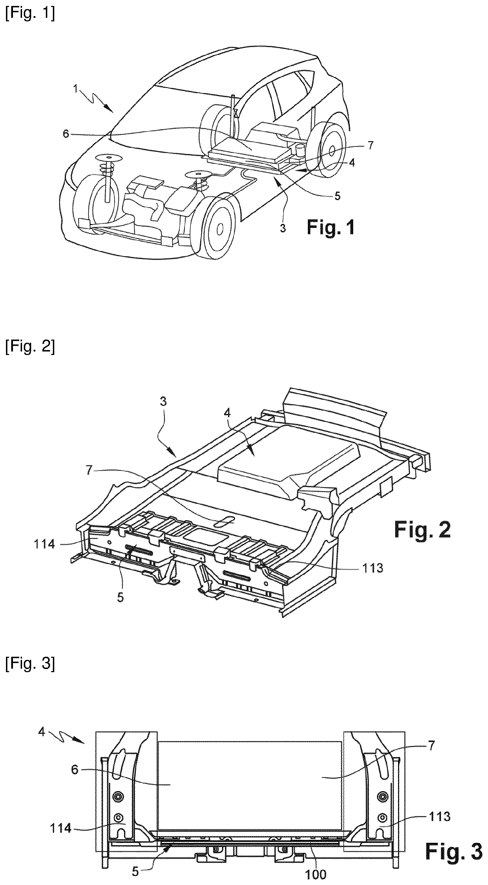

En se référant aux figures 1 et 2, un véhicule automobile 1 selon l'invention, comprend un châssis configuré pour supporter l'ensemble des composants mécaniques et la carrosserie dudit véhicule. Le châssis comprend classiquement deux longerons longitudinaux et une pluralité de traverses transversales disposées entre lesdits longerons, lesdits longerons et lesdites traverses n'étant pas visibles sur les figures. Un plancher du véhicule est supporté par le châssis et délimite l'intérieur de l'habitacle du véhicule. Le plancher d'un véhicule automobile comprend une partie arrière 3, appelée « plancher arrière », reliée à une partie avant appelée « plancher avant ».

Le plancher arrière 3 délimite la cabine des passagers arrière et comprend une partie avant délimitant une zone de plancher destinée à recevoir les pieds des passagers, aussi appelée « cave à pied » et une partie arrière 4 surélevée par rapport à la partie avant et délimitant une zone de plancher destinée à recevoir les sièges de la deuxième rangée de sièges. Les parties avant et arrière 4 du plancher 3 arrière sont reliée par un épaulement ou portion de jonction appelée « pareclose » 5. Ainsi, la pareclose 5 constitue une paroi pleine s'étendant suivant un plan sensiblement transversal et vertical YZ du véhicule. La partie avant du plancher arrière 3 n'est pas visible sur les figures.

En se référant aux figures 1 et 3, un véhicule 1 selon l'invention est un véhicule électrique ou hybride comprenant une batterie électrique 6 placée dans un compartiment 7 de la partie arrière 4 du plancher arrière 3, ledit compartiment 7 étant placé à proximité de la pareclose 5. Schématiquement, le compartiment 7 a une forme rectangulaire dont un grand côté avant comprend la pareclose 5. La batterie 6 est classiquement délimitée par un boitier 9 présentant un réceptacle 10 coiffé par un couvercle 11 et qui est placé dans le compartiment 7.

Lorsque survient un choc accidentel du véhicule 1 contre un obstacle extérieur pouvant par exemple être un poteau extérieur en position latérale par rapport audit véhicule 1, la batterie électrique 6 logée dans le compartiment 7 n'est pas protégée et peut subir un endommagement important pouvant avoir de sévères répercussions sur l'environnement.

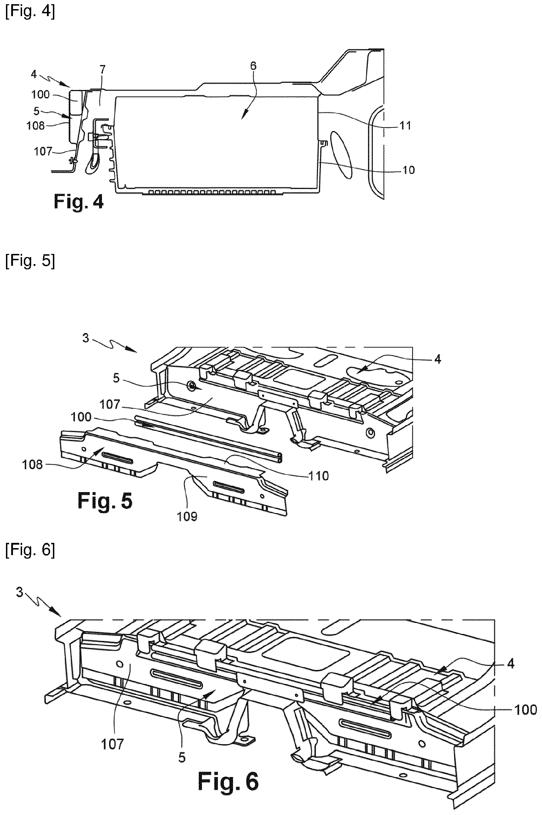

En se référant aux figures 4 à 8, afin de conserver l'intégrité de cette batterie électrique 6 lors d'un pareil choc, un véhicule 1 selon l'invention comprend un tube de renforcement 100 destiné à être fixé à la pareclose 5 afin notamment d'empêcher le compartiment 7 logeant la batterie 6 d'être trop fortement déformé.

En se référant aux figures 5, 6 et 8 le tube de renforcement 100 est rectiligne et est préférentiellement réalisé en acier profilé. Ce tube 100 est allongé et creux, et est délimité par une paroi continue et fermée. Cette paroi présente une première face plane 101 et une deuxième face plane 102 dont la largeur est inférieure à celle de ladite première paroi plane 101. La deuxième face plane 102 est plaquée contre une zone centrale de la première paroi plane 101 et relie ladite première paroi plane 101 au moyen de deux parois arrondies 103, 104 définissant deux tubes secondaires 105, 106 identiques et parallèles. De cette manière, les deux tubes secondaires 105, 106 délimitent chacun un canal secondaire et sont séparés l'un de l'autre par la zone de contact entre la première paroi plane 101 et la deuxième paroi plane 102. Le profil de la section transversale du tube de renforcement 100 a donc une forme générale en forme de B.

En se référant aux figures 4 à 8, la pareclose 5 comprend une première paroi plane 107 allongée s'étendant dans un plan vertical et transversal Y Z du véhicule sur toute la largeur du plancher arrière 3. Cette première paroi plane 107 marque bien un épaulement entre la partie avant (non visible sur les figures) et la partie arrière 4 du plancher arrière 3, qui est surélevée par rapport à ladite partie avant.

La pareclose 5 comprend également une deuxième paroi plane 108, destinée à venir se fixer à la première paroi plane 107. Cette deuxième paroi plane 108 est allongée, et comprend une face principale 109 et une face secondaire 110, lesdites deux faces étant perpendiculaires. La face secondaire 110 est plus courte que la face principale 109. Cette deuxième face plane 108 est préférentiellement réalisée en acier profilé et constitue un élément de renforcement pour la pareclose 5 venant compléter le tube de renforcement 100.

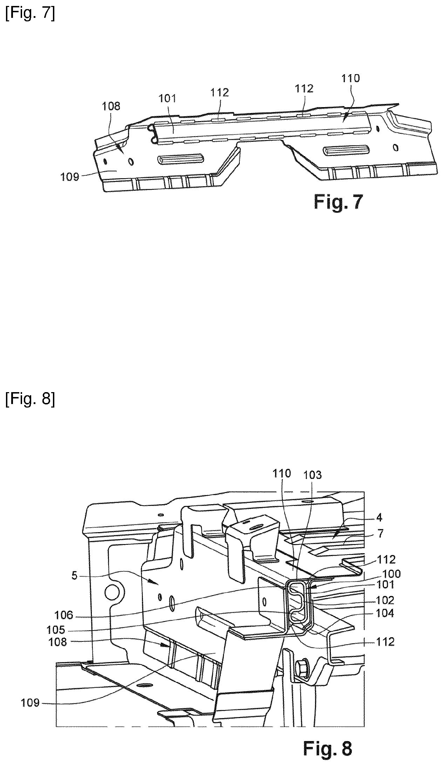

En se référant aux figures 7 et 8, le tube de renforcement 100 est fixé à la deuxième paroi plane 108 de la pareclose 5 par soudage au moyen de plusieurs cordons 112 de soudage. Plus précisément, le tube de renforcement 100 est fixé à une zone supérieure de la pareclose 5 de sorte qu'un axe longitudinal du tube 100 soit parallèle à un axe longitudinal de la deuxième paroi 108, et de sorte que ledit tube 100 vienne au contact des deux faces perpendiculaires 109, 110 de ladite deuxième paroi 108. De cette manière, le tube de renforcement 100 est soudé à la fois auxdites deux faces perpendiculaires 109, 110 au moyen de plusieurs cordons 112 de soudage s'étendant régulièrement le long dudit tube de renforcement 100. Le tube de renforcement 100 est placé contre la deuxième paroi plane 108 de sorte que les deux parois arrondies 103, 104 délimitant les deux tubes secondaires 105, 106 soient au contact de la face principale 109 de ladite paroi secondaire 108.

En se référant aux figures 4, 6 et 8, une fois que le tube de renforcement 100 a été soudé à la deuxième paroi 108 de la pareclose 5, ladite deuxième paroi plane 108 est solidarisée à la première paroi plane 107 de ladite pareclose 5. Cette solidarisation s'effectue de sorte que la face principale 109 de la deuxième paroi 108 soit parallèle à ladite première paroi plane 107 et de sorte que la face secondaire 110 s'étende perpendiculairement à ladite première paroi plane 107. Le tube de renforcement 100 se retrouve alors logé entre lesdites deux parois 107, 108. Avantageusement, la deuxième paroi 108 est soudée à la première paroi plane 107.

En se référant aux figures 3, 5, 6 et 7 le tube de renforcement 100 est indéformable, et s'étend dans une zone centrale de la pareclose 5. De cette manière, la pareclose 5 présente deux zones déformables 113, 114 situées de chaque côté du tube de renforcement 100. Le tube de renforcement 100 a pour objet de préserver la batterie électrique 6 logée dans le compartiment 7, dans le cas d'un choc accidentel du véhicule contre un obstacle extérieur. Grâce à ce tube de renforcement 100, ladite batterie 6 sera protégée et aura très peu de risque d'être endommagée. Les deux zones latérales déformables 113, 114 de la pareclose 5 ont pour objet, en association avec d'autres régions déformables de la structure du véhicule auxquelles elles sont rattachées, d'absorber au moins une partie de l'énergie qui a été produite lors de ce choc, pour notamment empêcher que cette énergie soit transmise ailleurs dans le plancher 3, et puisse commettre des dégâts importants.

## Revendications

1. Véhicule (1) électrique comprenant un plancher arrière (3) comportant une partie avant et une partie arrière (4) séparées par une pareclose (5), ladite partie arrière (4) comportant une portion avant dotée d'un compartiment (7) et d'une batterie électrique (6), la batterie électrique (6) étant logée dans le compartiment (7), ledit compartiment (7) étant délimité par ladite pareclose (5), **caractérisé en ce que** la pareclose (5) comprend un tube de renforcement (100) indéformable s'étendant le long de celle-ci sur une longueur qui est supérieure ou égale à la dimension de la batterie (6) considérée le long de ladite pareclose (5), et **en ce que** la pareclose (5) comprend deux zones d'extrémité (113, 114) déformables s'étendant de chaque côté du tube de renforcement (100).

2. Véhicule électrique selon la revendication 1, **caractérisé en ce que** le tube de renforcement (100) est rectiligne et est fixé à la pareclose (5) de manière à s'étendre parallèlement à ladite pareclose (5).

3. Véhicule électrique selon la revendication 2, **caractérisé en ce que** le tube (100) est fixé dans une zone supérieure de la pareclose (5) de sorte qu'un bord longitudinal supérieur du tube de renforcement (100) tangente un bord longitudinal supérieur de la pareclose (5).

4. Véhicule électrique selon l'une quelconque des revendications 2 ou 3, **caractérisé en ce que** le tube (100) est creux.

5. Véhicule électrique selon la revendication 4, **caractérisé en ce que** le tube (100) est délimité par une paroi fermée, et **en ce qu'**un côté de la paroi a été déformé pour venir au contact d'un autre côté de ladite paroi en définissant deux tubes secondaires (105, 106) parallèles.

6. Véhicule électrique selon la revendication 5, **caractérisé en ce que** les deux tubes secondaires (105, 106) sont fermés et sont séparés par une zone de contact entre les deux côtés de ladite paroi.

7. Véhicule électrique selon l'une quelconque des revendications 1 à 6, **caractérisé en ce que** la pareclose (5) comprend une première paroi (107) arrimée au plancher arrière (3), et **en ce que** le tube de renforcement (100) est solidarisé à une deuxième paroi (108) de ladite pareclose (5) qui est fixée à ladite première paroi (107), de sorte que le tube de renforcement (100) soit situé entre ladite première paroi (107) et ladite deuxième paroi (108).

8. Véhicule selon la revendication 7, **caractérisé en ce que** le tube de renforcement (100) est solidarisé à la deuxième paroi (108) par soudure.

9. Véhicule selon la revendication 8, **caractérisé en ce que** la deuxième paroi (108) présente deux faces perpendiculaires (109, 110), et **en ce que** le tube de renforcement (100) est soudé auxdites deux faces (109, 110).

10. Véhicule électrique selon l'une quelconque des revendications 7 à 9, **caractérisé en ce que** le tube (100) et la deuxième paroi (108) sont réalisés en acier profilé.

## Patentansprüche

1. Elektrofahrzeug (1), welches einen hinteren Boden (3) umfasst, der einen vorderen Teil und einen hinteren Teil (4) aufweist, die durch ein Verbindungsstück (5) getrennt sind, wobei der hintere Teil (4) einen vorderen Abschnitt aufweist, der mit einem Fach (7) und einer elektrischen Batterie (6) ausgestattet ist, wobei die elektrische Batterie (6) in dem Fach (7) aufgenommen ist, wobei das Fach (7) von dem Verbindungsstück (5) begrenzt wird, **dadurch gekennzeichnet, dass** das Verbindungsstück (5) ein nicht verformbares Verstärkungsrohr (100) umfasst, das sich entlang desselben auf einer Länge erstreckt, die größer oder gleich der entlang des Verbindungsstücks (5) betrachteten Abmessung der Batterie (6) ist, und dadurch, dass das Verbindungsstück (5) zwei verformbare Endbereiche (113, 114) umfasst, die sich auf jeweils einer Seite des Verstärkungsrohres (100) erstrecken.

2. Elektrofahrzeug nach Anspruch 1, **dadurch gekennzeichnet, dass** das Verstärkungsrohr (100) gerade ist und so an dem Verbindungsstück (5) befestigt ist, dass es sich parallel zu dem Verbindungsstück (5) erstreckt.

3. Elektrofahrzeug nach Anspruch 2, **dadurch gekennzeichnet, dass** das Rohr (100) in einem oberen Bereich des Verbindungsstücks (5) so befestigt ist, dass ein oberer Längsrand des Verstärkungsrohres (100) tangential zu einem oberen Längsrand des Verbindungsstücks (5) verläuft.

4. Elektrofahrzeug nach einem der Ansprüche 2 oder 3, **dadurch gekennzeichnet, dass** das Rohr (100) hohl ist.

5. Elektrofahrzeug nach Anspruch 4, **dadurch gekennzeichnet, dass** das Rohr (100) von einer geschlossenen Wand begrenzt wird, und dadurch, dass eine Seite der Wand verformt worden ist, um mit einer anderen Seite der Wand in Kontakt zu kommen, wobei zwei parallele sekundäre Rohre (105, 106) definiert werden.

6. Elektrofahrzeug nach Anspruch 5, **dadurch gekennzeichnet, dass** die zwei sekundären Rohre (105, 106) geschlossen sind und durch einen Kontaktbereich zwischen den zwei Seiten der Wand getrennt sind.

7. Elektrofahrzeug nach einem der Ansprüche 1 bis 6, **dadurch gekennzeichnet, dass** das Verbindungsstück (5) eine erste Wand (107) umfasst, die am hinteren Boden (3) befestigt ist, und dadurch, dass das Verstärkungsrohr (100) mit einer zweiten Wand (108) des Verbindungsstücks (5) fest verbunden ist, die an der ersten Wand (107) befestigt ist, derart, dass sich das Verstärkungsrohr (100) zwischen der ersten Wand (107) und der zweiten Wand (108) befindet.

8. Fahrzeug nach Anspruch 7, **dadurch gekennzeichnet, dass** das Verstärkungsrohr (100) mit der zweiten Wand (108) durch Schweißen fest verbunden ist.

9. Fahrzeug nach Anspruch 8, **dadurch gekennzeichnet, dass** das zweite Wand (108) zwei senkrechte Seiten (109, 110) aufweist, und dadurch, dass das Verstärkungsrohr (100) an die zwei Seiten (109, 110) angeschweißt ist.

10. Elektrofahrzeug nach einem der Ansprüche 7 bis 9, **dadurch gekennzeichnet, dass** das Rohr (100) und die zweite Wand (108) aus Profilstahl hergestellt sind.

## Claims

1. Electric vehicle (1) comprising a rear floor (3) having a front part and a rear part (4) separated by a partition (5), said rear part (4) having a front portion equipped with a compartment (7) and an electric battery (6), the electric battery (6) being housed in the compartment (7), said compartment (7) being delimited by said partition (5), **characterized in that** the partition (5) comprises a non-deformable reinforcing tube (100) extending along said partition over a length that is greater than or equal to the dimension of the battery (6) considered along said partition (5), and **in that** the partition (5) comprises two deformable end regions (113, 114) extending on each side of the reinforcing tube (100).

2. Electric vehicle according to Claim 1, **characterized in that** the reinforcing tube (100) is rectilinear and is fastened to the partition (5) so as to extend parallel to said partition (5).

3. Electric vehicle according to Claim 2, **characterized in that** the tube (100) is fastened in an upper region of the partition (5) such that an upper longitudinal edge of the reinforcing tube (100) is tangential to an upper longitudinal edge of the partition (5).

4. Electric vehicle according to either one of Claims 2 and 3, **characterized in that** the tube (100) is hollow.

5. Electric vehicle according to Claim 4, **characterized in that** the tube (100) is delimited by a closed wall, and **in that** one side of the wall has been deformed in order to come into contact with another side of said wall, defining two parallel secondary tubes (105, 106).

6. Electric vehicle according to Claim 5, **characterized in that** the two secondary tubes (105, 106) are closed and are separated by a region of contact between the two sides of said wall.

7. Electric vehicle according to any one of Claims 1 to 6, **characterized in that** the partition (5) comprises a first wall (107) attached to the rear floor (3), and **in that** the reinforcing tube (100) is secured to a second wall (108) of said partition (5), which is fastened to said first wall (107), so that the reinforcing tube (100) is situated between said first wall (107) and said second wall (108).

8. Vehicle according to Claim 7, **characterized in that** the reinforcing tube (100) is secured to the second wall (108) by welding.

9. Vehicle according to Claim 8, **characterized in that** the second wall (108) has two perpendicular faces (109, 110), and **in that** the reinforcing tube (100) is welded to said two faces (109, 110).

10. Electric vehicle according to any one of Claims 7 to 9, **characterized in that** the tube (100) and the second wall (108) are made of profiled steel.
